# EUROPEAN PATENT APPLICATION

(11) **EP 4 539 018 A1**
(43) Date of publication of application: **16.04.2025**
(21) Application number: 23020473.7
(22) Date of filing: 14.10.2023
(51) Int. Cl.: G09B 5/04, G09B 17/00

(54) **PHONICS KEYBOARD**

(71) Applicant: Kamal, Ali, Newport NP20 3EF (GB)
(72) Inventor: Kamal, Ali, Newport NP20 3EF (GB)

(57) **Abstract**

The Phonics Keyboard (100) is an innovative educational device designed specifically to aid in the interactive learning of reading and spelling through the use of phonetics for users, primarily targeting young learners. With an ergonomically designed body that includes a handle (501) for easy transportation, the device features a comprehensive array of buttons (301-310) related to the phonics alphabet (301), phonics words (302), games (305-307), and songs (308-310). The innovation offers immediate audio feedback upon button presses, allowing users to familiarize themselves with phonetic sounds (401-426), spellings, and words. Integral to the device is a control unit (502) that processes user input, fetches the relevant audio content, and delivers it through a speaker/microphone system (503). Furthermore, the Phonics Keyboard (100) possesses the capability to record (202) and playback audio (201), granting users the chance to practice pronunciation and playback their own renditions of phonetic sounds. This invention, combining the principles of interactive learning with technological prowess, promises an engaging and efficient method for reading, spelling, and language acquisition

## Description

### BACKGROUND

The present invention relates generally to educational technology and, more specifically, to an interactive device designed to teach Phonics to children in a fun, easy, and engaging manner by utilizing a piano-style keyboard format.

Learning to read is a critical skill in early childhood education, yet the process can be challenging for many children. Various methods have been developed to facilitate this learning, among which Phonics has gained wide recognition and application. Phonics is a method of teaching reading and spelling that focuses on the relationship between letters and their phonetic sounds. While effective, traditional methods of teaching Phonics often involve rote memorization and repetitive exercises, which may not cater to the diverse learning styles and attention spans of young children.

In recent years, educational technology has sought to make the learning process more interactive, engaging, and adaptable to individual needs. Various electronic devices have been designed to teach a range of subjects, including reading and writing. However, there is a noticeable gap for devices specifically geared toward teaching Phonics in a way that makes the experience exciting and enjoyable for children.

Currently, existing products often consist of basic electronic books, flashcards, or software applications for computers and tablets. While these may include auditory and visual components to aid learning, they often lack the physical, tactile experience that can be particularly helpful for young learners. Moreover, these existing solutions may not sustain a child's attention for extended periods, leading to limited interaction and, consequently, limited learning.

There is also a pedagogical opportunity to integrate music into Phonics education. Musical activities have been shown to improve memory retention, develop fine motor skills, and increase engagement. However, there has been limited innovation in this direction, particularly in combining musical interaction with the Phonics learning process.

Therefore, there is a need for a Phonics teaching device that not only incorporates an interactive and tactile experience but also leverages musical elements to capture and sustain a child's attention. Such a device should offer multiple modes of learning to cater to individual preferences and should be adaptable for children of various ages and learning abilities.

The present invention aims to fill this gap by introducing a Phonics Keyboard designed in the style of a piano, incorporating various games, tunes, and songs that focus on teaching phonics in a fun, easy, and engaging manner.

### Phonemic Awareness & Educational Tools

The importance of phonemic awareness in language education, particularly for early learners, has long been established. Various tools and technologies have been developed to facilitate this kind of learning. Among these are digital educational platforms that feature interactive exercises to boost phonemic awareness (US8083523B2) and tangible manipulatives combined with digital interfaces to identify and pronounce letters (US11238752B2).

### Digital Educational Platforms

Patent US8083523B2 describes a computer-based educational platform that aims to enhance a student's phonemic awareness, decoding, spelling, and oral and written comprehension. This system employs a suite of twelve interactive exercises that adapt to the student's progress, gradually increasing in difficulty. While this method engages students in a comprehensive learning experience, it does so through a screen environment and does not incorporate a physical keyboard interface designed for phonemic input.

### Physical Manipulatives with Digital Interface

Patent US1123875282 utilizes physical manipulatives, such as letter blocks, that a user places on a device equipped with receptacles. The device uses capacitance measurement to identify each letter block and outputs the pronunciation of the letter accordingly. Though this method incorporates a tactile component into phonemic learning, it's geared towards teaching alphabets and their sounds and not for typing or word construction. Also, the system involves capacitive elements that make it more complex and possibly less accessible than a keyboard interface.

### Traditional Keyboards and Phonetic Layouts

Conventional keyboard designs have also been adapted to feature phonetic layouts that aim to simplify the input of text. However, these adaptations usually focus on facilitating the phonetic transcription of languages and are not specifically designed to enhance phonemic awareness or to provide phonemic output.

While the described related art focuses on facilitating phonemic awareness and language learning through various digital platforms, tangible manipulatives, or adjustments to existing keyboard layouts, none combine the features of a physical keyboard interface with real-time phonemic output. Furthermore, the present invention can be used by children as young as 18 months because it is in a piano style, children instinctually are aware of what to do, to push and hear sound.

### STATEMENT OF THE INVENTION

To overcome the difficulties explained above, the present invention proposes a device designed to be a teaching tool for children aged 18 months and above to understand and learn the phonetic alphabet in an engaging and interactive manner. The device resembles a piano keyboard, where each key corresponds to a letter of the alphabet and emits respective phonic sounds upon being pressed.

Unlike traditional phonics learning tools, this device harnesses the musical attributes of a piano, turning phonics into tuneful sounds, thus making the learning process more appealing. This approach not only enhances the child's phonetic learning but also encourages them to interact with the device longer than they would with traditional learning tools.

The Phonics Keyboard operates electronically, requiring a power source, such as batteries or a charger. It's versatile enough to be adapted to multiple languages, including but not limited to English, Arabic, French, German, Spanish, Urdu, Hindi, and Chinese.

The unique design and function allow the child to play and learn simultaneously. The keyboard integrates a variety of interactive functionalities, such as phonics tunes, games to identify starting letters, games to find specific letters, and spelling games. For further engagement, the device is equipped with original songs related to the ABCs and Phonics.

Additional functionalities include volume controls, a recording feature for children to record their voice or a sequence of phonic sounds, and a reset button to clear previous recordings. The device's intuitive design, coupled with its engaging functionalities, ensures an innovative approach to learning phonics in a way that is both enjoyable and educational.

### ADVANTAGES

The Phonics Keyboard offers a myriad of advantages as a versatile educational tool, making it a valuable asset for both learners and educators. Here are some of its key benefits:

### Multimodal Learning:

The Phonics Keyboard encompasses various learning modes and games, allowing users to explore phonics, alphabets, spelling, and tunes in an interactive manner. This multimodal approach caters to different learning styles and preferences.

### Interactive Feedback:

The device provides instant, responsive feedback based on user inputs. This feature is particularly helpful in games, where it guides learners through correct and incorrect answers, fostering a supportive learning environment.

### Personalized Learning:

With the record and playback features, users can focus on specific letters or sounds they find challenging. This functionality enables personalized learning experiences and allows for repetition and reinforcement at the learner's pace.

### Engagement Through Music:

The inclusion of ABC, Phonics, and Spelling songs adds a musical dimension to the learning process. Music is known to enhance memory retention and engagement, making learning more enjoyable and effective.

### Portability and Convenience:

The handle and compact design of the Phonics Keyboard facilitate easy transportation, allowing learning to take place anywhere, be it in a classroom, at home, or on the go.

### User-Friendly Interface:

The clear layout and intuitive button design make the Phonics Keyboard accessible and easy to use for learners of various ages, ensuring a smooth and hassle-free experience.

### Comprehensive Phonics Education:

The device offers a well-rounded approach to phonics education by incorporating elements like alphabet sounds, word pronunciation, animal names, and spelling, providing a foundation for literacy skills.

### Adaptive Learning:

Games like the "Find the Letter Game" and "Spelling Game" adapt to the user's performance, offering new challenges or support as needed. This adaptive approach encourages persistence and resilience in learners.

### Enhanced Learning Retention:

The interactive and varied nature of the Phonics Keyboard activities promotes better memory retention compared to passive learning methods, fostering long-term knowledge acquisition.

### Encouragement and Motivation:

Positive reinforcement through congratulatory messages and gentle redirection during mistakes maintains a motivating and encouraging learning atmosphere, fostering a positive association with learning.

### Durable Design:

The Phonics Keyboard is designed with durability in mind, featuring a sturdy base and secure screw openings, ensuring longevity and reliability in various environments.

In summary, the Phonics Keyboard stands as an innovative and comprehensive solution to phonics learning, combining technology, interactivity, and adaptability to meet the diverse needs of learners and create a foundation for literacy development.

### DESCRIPTION OF THE DRAWINGS

FIG. 1 is a perspective top left view of the phonic keyboard.
FIG. 2 is a perspective top right view of the phonic keyboard.
FIG. 3 is the front view of the phonic keyboard.
FIG. 4 is the back view of the phonic keyboard.
FIG. 5 is the top view of the phonic keyboard.
FIG. 6 is the left side view of the phonic keyboard.
FIG. 7 is the right side view of the phonic keyboard.
FIG. 8 is the bottom view of the phonic keyboard.
FIG. 9 is the exploded top perspective view of the phonic keyboard.
FIG. 10 is the control device of the phonic keyboard.
FIG. 11 is the inside view showing the internal components of the phonic keyboard.

### REFERENCE NUMERALS IN THE DRAWINGS

100. Phonics Keyboard
101. Power
102. Volume Up
103. Volume Down
201. Play
202. Record
203. Reset
301. Phonics Alphabet
302. Phonics Words
303. Phonics Animals
304. Phonics Tunes
305. Starting Letter Game
306. Find the Letter Game
307. Spelling Game
308. ABC Song
309. Phonics Song
310. Spelling Song
401. Letter A/ Ant
402. Letter B/ Bat
403. Letter C/ Cat
404. Letter D/ Dog
405. Letter E/ Elephant
406. Letter F/ Fox
407. Letter G/ Goat
408. Letter H/ Hen
409. Letter I/ Impala
410. Letter J/ Jaguar
411. Letter K/ Kangaroo
412. Letter L! Lion
413. Letter M/ Monkey
414. Letter N/ Newt
415. Letter fll Owl
416. Letter P/ Panda Bear
417. Letter Q/ Queen Bee
418. Letter R/ Rhinoceros
419. Letter S/ Sheep
420. Letter T/ Tiger
421. Letter U/ Unicorn
422. Letter V/ Vulture
423. Letter W/ Whale
424. Letter X/ X-ray Fish
425. Letter YI Yak
426. Letter Z! Zebra
500. Body
501. Handle
502. Control Unit
503. Speaker/Microphone
504. Audio processor
505. Battery compartment
506. On/off button of the power source
507. Base
508. Screws
509. Openings of speaker/microphone
510. Speaker/microphone holder
511. Screws openings
512. Wires
513. Board
514. PCB for buttons
515. Body openings
516. Battery compartment cover

### DETAILED DESCRIPTION OF THE INVENTION

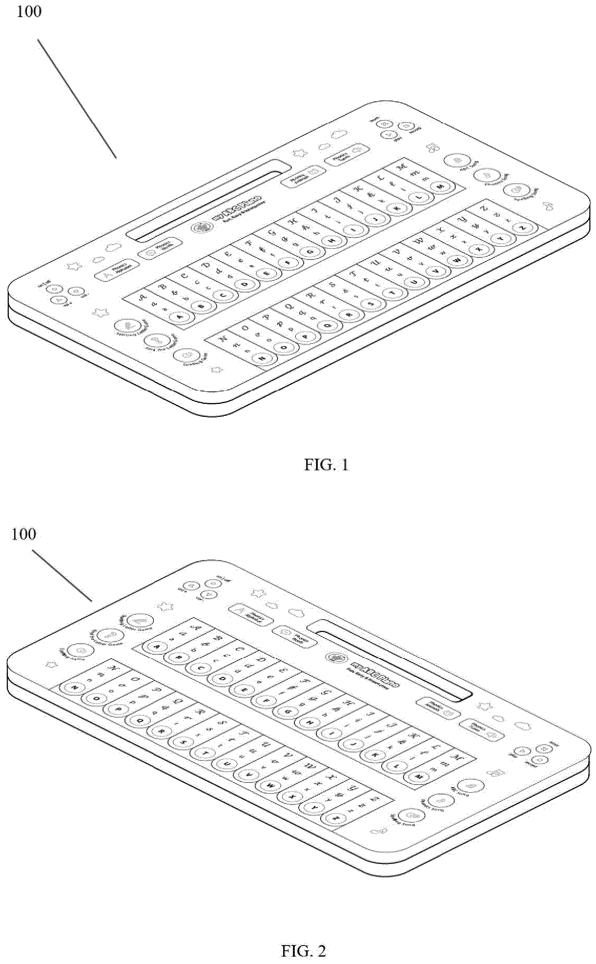

Referring to FIG. 1 and FIG. 2, the Phonics Keyboard of the present invention is an innovative educational tool designed specifically for children aged 18 months and over. Its primary purpose is to facilitate the learning of the phonetic alphabet in an engaging, interactive, and fun manner. The device takes inspiration from a piano keyboard, with each key corresponding to a particular letter of the alphabet. When pressed, these keys emit the associated phonic sound, allowing children to associate letters with their phonetic sounds.

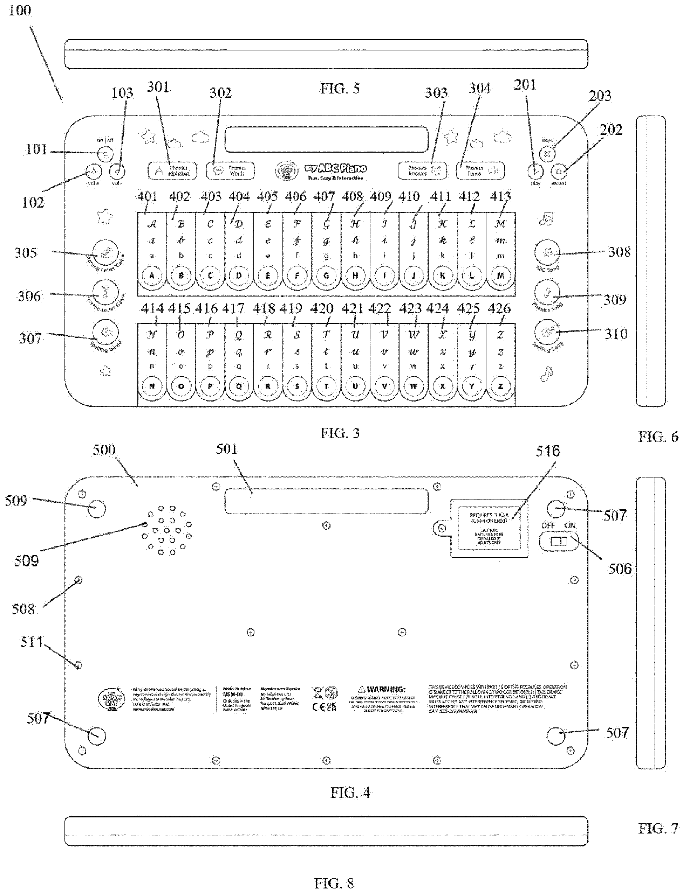

Referring to FIG. 5, this is a top view of the Invention Viewing the Phonics Keyboard from the top.

Referring to FIG. 6, this is a left Side View of the Phonics Keyboard of the present invention. This offers a side look at the device, showcasing the depth and thickness of the body.

Referring to FIG. 7, this is the right Side View of the Phonics Keyboard of the present invention Similar to FIG. 6 but showcases the right profile of the Phonics Keyboard. Referring to FIG. 8, this is the bottom View of the Phonics Keyboard of the present invention.

Referring to FIG. 4 this is the back view of the phonics keyboard of the present invention.

The body 500 is the main structure of the device, designed ergonomically to be easily held by children. The body houses the internal components.

The handle 501 is a part of the body 500 for ease of carrying and to provide a secure grip for children. There is an on/off button 506 for power source control. There is a base 507 at the bottom of the device, designed to be sturdy and stable when placed on a surface. The screws 508 and screw openings 511 are used to assemble and secure parts of the device. The openings for speaker/microphone 509 are to allow for clear emission of sound. The battery compartment cover 516 is to cover and secure the batteries inside the device.

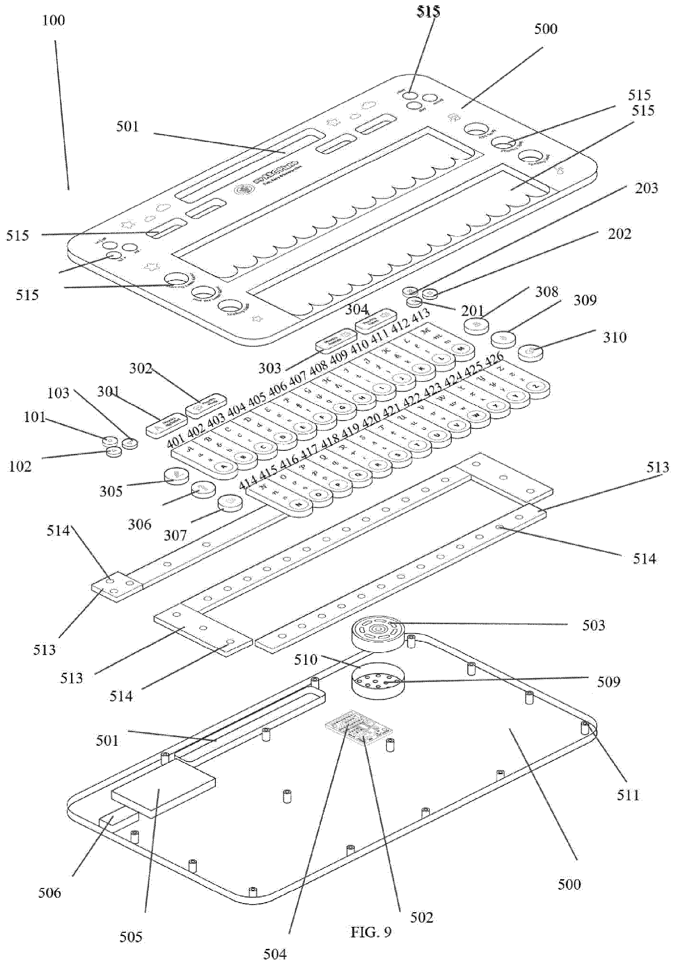

Referring to FIG. 9, this is an exploded top perspective view of the Phonics Keyboard of the present invention to show the structural components of the invention.

The power button 101 is to switch the device on or off. The volume up 102 and volume down 103 are to allow for adjusting the audio output level. The play button 201 and record button 202 are used for playback of recorded audio and to start a new recording, respectively. The reset 203 is to clear the previous recordings or selections and prepare the device for a new task.

The phonics alphabet button 301 Introduces the child to the phonetic sounds of individual letters. The phonics words button 302 helps the child associate letters with common words. The phonics animals button 303 is an engaging way for children to link letters with corresponding animal names. The phonics tunes button 304 is for turns phonics into tuneful sounds, enhancing retention and making learning enjoyable. The starting Letter game button 305 is an interactive game where children are prompted to find the starting letter of a given word. The find the letter game button 306 challenges children to identify a specified letter based on its phonetic sound. The spelling game button 307 aims to improve spelling skills by having children spell words using phonetic cues. The ABC song button is to play ABC song 308. The phonics song button 309 is to play the phonics song, and the spelling song button 310 is to play the spelling song.

The keys of the phonic keyboard of the present invention are from reference number 401 to reference number 426 as the following:
letter CJCat 403, letter D/ Dog 404, letter E/ Elephant 405, letter F/ Fox 406, letter G! Goat 407, letter H/ Hen 408, letter I/ Impala 409, letter J/ Jaguar 410, letter K/ Kangaroo 411, letter L/ Lion 412, letter M/ Monkey 413, letter N/ Newt 414, letter O/ Owl 415, letter P/ Panda Bear 416, letter Q/ Queen Bee 417, letter R/ Rhinoceros 418, letter S/ Sheep 419, letter T/ Tiger 420, letter U/ Unicorn 421, letter V/ Vulture 422, letter W/ Whale 423, letter X/ X-ray Fish 424, letter Y/ Yak 425 and letter Z/ Zebra 426.

As shown in FIG. 9, the rest of the phonic keyboard components are the handle 501, the control unit 502 which is a centralized system that processes input from buttons and produces corresponding output, the speaker/microphone 503 that is a component that emits the phonics sounds and songs, and in recording mode, it captures the voice or selected phonics sounds, the audio processor 504, the battery compartment 505, the on/off button of the power source 506, the openings of speaker/microphone 509, the speaker/microphone holder 510, the screws openings 511, the board 513 and PCB for buttons 514.

Also, the phonic keyboard 100 includes the audio processor 504 is responsible for processing and storing audio files, including songs and recordings. Battery compartment 505 houses the batteries that power the device. The on/off button 506 for power source control. Base 507 and screws 508.

The speaker/microphone holder 510 ensures the speaker/microphone is held securely within the device. The wires 512 connect various internal components. The board 513 and PCB for buttons 514 contain the circuits that process button inputs and relay them to the control unit. The body openings 515 is designed for the placement of buttons and other interactive elements. And the battery compartment cover 516.

Referring to FIG. 3 this is the front view of the invention to show a direct frontal view showcases the entire array of buttons.

The primary focus of the Phonics Keyboard is to provide an interactive learning experience. A user, predominantly a child, can press any of the phonics-related buttons to initiate a lesson. For instance, pressing the "Phonics Alphabet" 301 button would prompt the device to ask the child to press individual letters to hear their phonetic sound. The "Phonics Words" 302 module might have the device pronounce a word phonetically, helping the child understand word construction. Over time, the child gets familiar with phonetic sounds and starts associating them with written letters, aiding in language acquisition.

In this part, we will explain how the child can use the Phonics Keyboard:
The child presses the power button 101 to turn it on. Then the child presses the volume up button 102 to increase the volume level or presses volume down button 103 to decrease the volume level.

When the child pushes the phonics alphabet 301, it says, welcome to phonics alphabet. Can you push a letter to hear the alphabet? Then the user pushes, for example, A and it says A.

And then When the child pushes phonics words 302, it'll say, welcome to Phonics Words. Can you push a letter to hear a word? for example, if the child pushes letter A 401, it's A, so the device will say, Apple, A-A- Apple. And then if they press letter B 402, the device will say bat, ba, ba, bat 303 is the phonics animals. If the child pushes phonics animals 303, it'll say, welcome to phonics animals, push a letter to hear an animal. And then if a user pushes the letter A 401, it'll say ant, a, a, ant. And if he pushes the letter B 402, it'll say bat, ba, ba, bat.

When the user pushes the phonic tune button 304, the device says welcome to phonics tune, press a letter to hear a tune.

When the child pushes the starting letter game button 305, it says welcome to the starting letter game, can you find the letter starts with panda, then the child clicks the letter P 416 and the child will get a sound telling him he is right, then, it says, well done, push the button again to hear another word or if he pushed wrong button, the phonic keyboard will produce a sound saying oops do you want to try again, then he tries again. The phonic keyboard designed to know the right and wrong answers.

When the child pushes the letter game button 306, it says, welcome to the find the letter game, can you find the letter H, H, H, H? And then he clicks H, and then can you find the letter M, M, M, M? And then he pushes M, and then he finds the letter M. And if he get it right, the phonic keyboard will say well done. If he gets it wrong, the phonic keyboard will say oops, do you want to try again? And then if he gets it right, the phonic keyboard will say oh, do you want to push the button again to hear another letter?.

When the child pushes the spelling game button 307, the phonic keyboard says welcome to the spelling game. Can you press a letter to spell a word? So then the child presses it, for example, the letter A 401. And it says, ant, a, n, t, ant (says it in with Phonics sounds) Can you spell ant? And then he pushes a, and then n, and then t, the phonic keyboard will say, well done, and then if the child gets it wrong, it says, oops, do you want to try again? And he gets three chances. And after the three chances, the phonic keyboard says let's spell it together. So this time it says, can you spell ant, a, n, t, (no phonics just letters are said) and then they press a, n and then t and if he gets it right then it says fantastic, if he gets it wrong, it says let's try another word then it goes back to start another word.

When the child pushes the ABC songs button 308, it produces the ABC songs.

When the child pushes phonics song button 309, it produces a phonics song.

When child pushes the spelling song 310 button, it produces a spelling song.

When the child presses the record button 202 and pushes any key, it will record the sound produced from this key. For example, if the child pushes A, B, C, then it'll say A, A, A, B, B, B, C, C C. And then he can play it back by pressing the play button 201. This record button 202 will help if the child is struggling with some of the letters like T and D and K.

When the child presses the reset button 203, it resets the phonic keyboard to start recording something new.

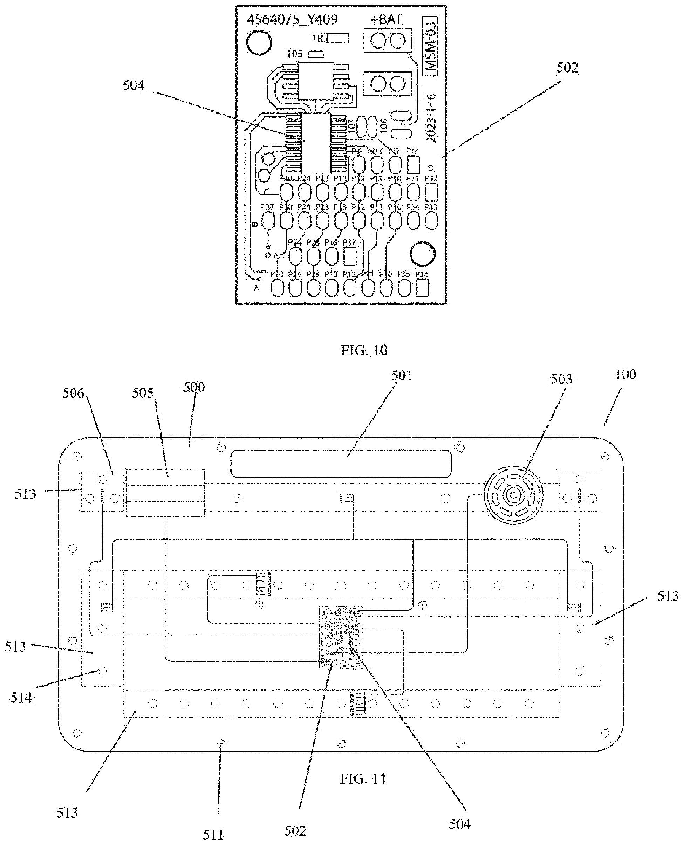

At the end, the child presses the power button 101 to turn phonic keyboard off
Referring to FIG. 10, this is the control device 502, it is the brain of the Phonics Keyboard, and it provides insight into how user inputs are processed to produce outputs. The control device 502 includes the audio processor 504.

Referring to FIG. 11, this illustration presents an inside view of the Phonics Keyboard, revealing its internal components and demonstrating the operations they perform. The device operates through a network of interconnected components, ensuring a seamless and immersive phonics learning experience.

When a button on the Phonics Keyboard is pressed, the input is registered on the board 513 and promptly relayed to the control unit 502. Depending on the nature of the input, the control unit 502 processes the request and retrieves the corresponding audio file stored in the audio processor 504. This audio file is then channeled to the speaker/microphone component 503, where it is played out loud for the user.

If a recording is being initiated, the same speaker/microphone component 503 is responsible for capturing the audio. The captured sound is processed by the audio processor 504 and stored, making it available for future playback.

Powering the entire operation of the Phonics Keyboard are batteries, which are securely housed in the battery compartment 505. The battery compartment ensures a consistent power supply to the various components, enabling uninterrupted learning experiences. The intricate network of integrated circuits within the device orchestrates all operations, ensuring the smooth functioning of the Phonics Keyboard.

To accommodate the internal components and operations, the Phonics Keyboard is structured with an ergonomically designed body 500, featuring a handle 501 for portability. The device also features a stable base 506 and is furnished with a series of additional buttons and features identified by reference numbers 511 and 514, contributing to the versatile and interactive nature of the educational tool.

In conclusion, the Phonics Keyboard, with its unique design and a multitude of interactive features, offers an engaging and enjoyable learning process. The adaptability of the device to various languages enhances its versatility, making it a suitable educational tool for a diverse, global audience.

## Claims

1. A phonics Keyboard in the piano style (100) comprising:
a body (500) ergonomically designed for ease of use and housing integral components;
a handle (501) attached to said body (500) for ease of carrying and providing a secure grip;
a series of interactive buttons including phonics alphabet (301) in the piano style keys wherein there is a letter on every key, phonics words (302), phonics animals (303), phonics tunes (304), starting letter game (305), find the letter game (306), spelling game (307), ABC song (308), phonics song (309) and spelling song (310);
a control unit (502) that processes input commands from said buttons and produces relevant audio outputs;
a speaker/microphone (503) integrated into said device, designed for both audio playback and recording;
an audio processor (504) housed within said device for storing and managing audio files; and,
a battery compartment (505) supplying power to the phonics keyboard (100).

2. The phonics Keyboard of claim 1, further comprising a power button (101) for toggling the device on or off, and volume adjustment buttons (102, 103) for controlling audio output levels.

3. The phonics Keyboard of claim 1, wherein said interactive buttons produce specific phonetic sounds, words, tunes, or initiate games upon being pressed.

4. The phonics Keyboard of claim 1, wherein when a child presses the piano style keys, the phonics keyboard device will reveal the sounds that are configured to it, and the piano style keys allow the user to fully interact with the learning process, wherein the keys push back after pressing, allowing the user to push it again if need be, using of the phonics piano style keyboard device makes it easier and suitable for teaching phonics from an early age.

5. The phonics Keyboard of claim 1, wherein said interactive buttons produce specific phonetic sounds, words, tunes, or initiate games upon being pressed.

6. The phonics Keyboard of claim 1, further comprising a play button (201) and record button (202), enabling users to record and playback their own phonetic sounds or words.

7. A method for phonetic learning using the phonics keyboard of claim 1, the method comprising the steps of:
activating the Phonics Keyboard (100) using the power button (101);
selecting a desired learning module by pressing one of the interactive buttons, phonics alphabet button 301, phonics words button (302), phonics animals button 303 or phonics tunes button (304);
interacting with said module by pressing relevant keys or buttons, receiving audio feedback;
optionally recording user produced phonetic sounds using the record button (202);
playback of recorded sounds using the play button (201); and,
concluding the learning session by deactivating the Phonics Keyboard (100) using the power button (101).

8. The method of claim 7, further comprising the step of adjusting the volume of audio outputs using the volume adjustment buttons (102, 103).

9. The method of claim 7, wherein said interactive learning modules further include games (305-307) that challenge users to identify letters, spell words, or recognize starting letters of given words based on phonetic sounds.

10. The phonics Keyboard of claim 1, wherein the speaker/microphone (503) is securely held within the device by a speaker/microphone holder (510).

11. The phonics Keyboard of claim 1, further comprising a reset button (203) allowing users to clear previous interactions or recordings, preparing the device for a new task.

12. The phonics Keyboard of claim 1, wherein each interactive button corresponding to a letter of the alphabet also represents a specific animal, reinforcing phonetic learning through association.

13. The phonics Keyboard of claim 1, wherein the control unit (502) collaboratively operates with the audio processor (504) and speaker/microphone (503) to produce audio feedback, manage recordings, and playback audio content based on user interaction.

14. The phonics Keyboard of claim 1, designed with a base (507) ensuring stability when placed on a surface.

15. The phonics Keyboard of claim 1, wherein components of the device are secured and assembled using screws (508) and matched screw openings (511).

16. The phonics Keyboard of claim 1, wherein the device is adaptable to various languages, facilitating phonetic learning for a global audience.

17. The phonics Keyboard of claim 1, wherein the ABC song (308) is to produce ABC songs.

18. The phonics Keyboard of claim 1, wherein the phonics song (309) is to produce a phonics song.

19. The phonics Keyboard of claim 1, wherein the spelling song (310) is to produce a spelling song.
